# EUROPEAN PATENT SPECIFICATION

(11) **EP 3 423 508 B1**
(45) Date of publication and mention of the grant of the patent: **27.04.2022**
(21) Application number: 17709857.1
(22) Date of filing: 23.02.2017
(51) Int. Cl.: C08G 18/67, C09D 175/16, C08L 75/16, C08G 18/48, C08G 18/76, C08G 18/10, C08G 18/28

(54) **CURABLE URETHANE ACRYLATE COMPOSITION**
HÄRTBARE URETHANACRYLATZUSAMMENSETZUNG
COMPOSITION D'URÉTHANE ACRYLATE DURCISSABLE

(30) Priority: 04.03.2016 IT UA20161353
(43) Date of publication of application: 09.01.2019
(73) Proprietor: DOW GLOBAL TECHNOLOGIES LLC, Midland, MI 48674 (US)
(72) Inventor: PELLACANI, Luigi, 42015 Correggio (IT); QIAN, Huifeng, Freeport, TX 77541 (US); SHAFI, Muhammad A., Freeport, TX 77541 (US)
(74) Representative: Beck Greener LLP
(86) International application number: PCT/US2017/019095
(87) International publication number: WO 2017/151380

(56) References cited:
- EP-A1- 2 479 197
- WO-A1-2008/120984
- US-A1- 2001 025 062
- US-A1- 2003 210 879

## Description

### Field of Invention

The instant invention relates to a curable urethane acrylate composition.

### Background of the Invention

US 2001/0025062 relates to radiation-curable inner and outer primary optical fiber coatings having both fast cure speed and reduced rates of yellowing. The compositions comprise particular photoinitiators and UV absorbers which are used in amounts to provide the combination of properties. The UV absorber can have ethylenic unsaturation. Outer primary coatings can be formulated to screen inner primary coatings and have fast cure speed. US 2003/0210879 relates to a resin composition for a coating for an optical fiber which comprises a radical polymerizable oligomer (A) and a radical polymerizable monomer (B), wherein (A) comprises a radical polymerizable oligomer (A1) with Mn of 600 to 1600 formed by reacting compounds (1) to (3) below: (1) an aliphatic polyol compound with Mn of 50 to 600, (2) a polyisocyanate compound with a ring structure, and (3) a compound with a hydroxyl group and a radical polymerizable unsaturated group; and a radical polymerizable oligomer (A2) formed by reacting compounds (4) to (6) below: (4) an aliphatic polyol compound with Mn of 800 to 10,000, (5) a polyisocyanate compound, and (6) a compound with a hydroxyl group and a radical polymerizable unsaturated group; a mass ratio (A1)/ (A2) is 20/80 to 80/20, and a concentration of urethane linkages within the resin composition is 1.85 to 3.00 mol/kg. WO 2008/120984 relates to a curable liquid resin composition comprising: (A) a urethane (meth)acrylate having a structure derived from polypropylene glycol with a number average molecular weight of about 4,000 or less; (B) a urethane (meth)acrylate having a structure derived from a polypropylene glycol with a number average molecular weight of more than about 4000; (C) a (meth)acrylate monomer; and (D) a polymerization initiator; wherein from about 50 to about 80 mass% of the component (C) is 2-ethylhexyl (meth)acrylate, and from about 50 to about 90 mass% of the component (D) is 1-hydroxycyclohexyl phenyl ketone. This composition, when cured, provides a cured product having low self- adhesiveness and a high stress relaxation rate. The composition is suitable for use as a Secondary Coating or as a Matrix Coating for Optical Fibers. EP 2479197 relates to an active-energy-ray-curable resin composition for forming a hard coating layer that protects the surface of a touch panel or the like and makes fingerprints less noticeable. The active-energy-ray-curable resin composition includes a urethane (meth)acrylate (A) prepared through a reaction in which a polyalkylene glycol (C) having a weight-average molecular weight Mw in a range of 5,000 to 30,000, a polyisocyanate (D), and a (meth)acrylate (E) intramolecularly including a hydroxyl group serve as essential raw-material components; and a polyfunctional (meth)acrylate (B), with a mass ratio [(A)/(B)] of (A) to (B) being in a range of [0.1/99.9] to [15/85] .

DE 10 2012 219 479 A1 describes a reaction resin composition for the chemical fastening of anchoring means in boreholes and for structural bonding. The composition comprises a resin component (A) which contains at least one radical curable compound (a-1) and at least one epoxy resin (a-2) which contains on average more than one epoxy group per molecule, and a hardener component (B) which a curing agent for the at least one free radical compound (b-1) and at least one amine (b-2), the compounds (a-1) and (b-1) and the compounds (a-2) and (b- 2) are each spatially separated from one another in a reaction-inhibiting manner, with the proviso that the composition contains no Cu, Mn and iron compounds and no bridging compound. In the resin component, the ratio of double bond value to epoxy value nDB: nEP is between 0.01 and 0.55 or between 5 and 50. WO 2015/011180 describes a resin mixture comprising at least one radically polymerizable compound, at least one reactive diluent selected from among 1,3-dicarbonyl compounds and at least one polymerization inhibitor selected from among stable N-oxyl radicals or 4-hydroxy-3,5-di-tert-butyltoluene, the molar ratio of the at least one 1,3-dicarbonyl compound and the polymerization inhibitor being 30:1 to 150:1, a reaction resin mortar containing this resin mixture, a two-component or multicomponent mortar system and the use for building purposes, in particular for chemical fixing in mineral substrates. DE 41 11 828 relates to a cartridge for chemically fixing anchor bars in bore holes, containing a vinyl ester-urethane resin curable by a free-radical mechanism and - arranged spatially separate from this - a curing agent for the resin. EP 1935860 relates to a two component reaction resin (X) comprising: a resin component (A1) containing at least one free radically-hardened, ethylenically unsaturated compound (a), an agent (b) for adjusting the reactivity and the gel time, and at least one comonomer (c); and a hardener component (B1), which is arranged separately to inhibit reaction, containing a hardening agent for the resin of (A1), where (b) contains pyrocatechol derivatives of formula (I).

The thermosetting resins used in fiber reinforced composites mainly include unsaturated polyesters, vinyl esters, epoxies, phenolics, polyimides and polyurethanes. Recently, polyurethane resins have attracted broad interest as composite matrix materials. Compared with traditional unsaturated polyester, vinyl ester, and epoxy resins, polyurethane resins offer increased toughness, exceptional durability, and fast cycle time. The use of polyurethane as the resin matrix in fiber reinforced composites potentially offers various benefits: for instance in the pultrusion process, polyurethane allows the use of a higher concentration of fiberglass, or alternatively of a simpler reinforcement lay-up, with limited impact on the strength of the end product.

However, the high reactivity of two-component (isocyanate and polyol) polyurethane resins not only allows fast cycle time of process, but it also reduces the pot life of the resin system to typically less than 30 minutes. The short pot life of two-component polyurethane resins has limited their application in many composite fabrication processes. In some composite fabrication processes, polyurethanes are usually limited to small composite articles or articles with simple cross section, because of the short pot life of the mixed resin and the quick increase of viscosity. Composites made from polyurethane resins that combine high glass transition temperatures (Tg) higher than 60°C and preferably higher than 70°C with the toughness levels typical of polyurethanes, are desired.

### Summary of the Invention

In one broad embodiment of the present invention, there is disclosed A curable resin composition comprising: (1) 30 to 80 percent by weight of a urethane (meth)acrylate;
(2) a reactive diluent comprising at least 20 percent by weight of glycols and/or polyols with terminal acrylate or methacrylate groups; and (3) a free radical-generating catalyst selected from tert-Butyl peroxyneodecanoate, benzoyl peroxide, dicumyl peroxide, methyl ethyl ketone peroxide, lauryl peroxide, cyclohexanone peroxide, t-butyl perbenzoate, t-butyl hydroperoxide, t-butylbenzene hydroperoxide, cumene hydroperoxide, t-butyl peroctoate, azobis-isobutyronitrile, 2-tbutylazo-2-cyano-4-methylpentane, and 4-t-butylazo-4-cyano-valeric acid.

In an alternative embodiment, the instant invention provides a composition, in accordance with the preceding embodiment, except that the curable resin composition comprises 40 to 65 percent by weight of said urethane (meth)acrylate, 35 to 60 percent by weight of said reactive diluent, and 0.001 to 10 percent by weight of said free radical-generating catalyst, based on the total weight of the curable resin composition.

In an alternative embodiment, the instant invention provides a composition, in accordance with the preceding embodiment, except that the urethane (meth)acrylate is a reaction product of a polyisocyanate, a polyol, and a compound comprising a nucleophilic group and a (meth)acrylate group.

In an alternative embodiment, the instant invention provides a composition, in accordance with the preceding embodiment, except that the compound comprising a nucleophilic group and a (meth)acrylate group is selected from the group consisting of hydroxyethyl acrylate, hydroxypropyl acrylate, hydroxyethyl methacrylate, hydroxyethyl acrylamide, hydroxypropyl acrylamide, and mixtures thereof.

In an alternative embodiment, the instant invention provides a composition, in accordance with the preceding embodiment, except that the urethane (meth)acrylate has a free isocyanate group content in the range of from 0 to 0.1 percent by weight, based on the total weight of the urethane (meth)acrylate.

In an alternative embodiment, the instant invention provides a composition, in accordance with the preceding embodiment, except that the reactive diluent is selected from the group consisting of 1,4-butanediol diacrylate (BDDA), 1,6-hexanediol diacrylate (HDDA), diethylene glycol diacrylate, 1,3-butylene glycol diacrylate, neopentyl glycol diacrylate, cyclohexane dimethanol diacrylate, dipropylene glycol diacrylate, tripropylene glycol diacrylate, ethoxylated bisphenol A diacrylate, trimethylolpropane triacrylate, pentaerythritol triacrylate, pentaerythritol tetraacrylate, their corresponding methacrylate analogues, and derivatives and mixtures thereof.

In an alternative embodiment, the instant invention provides a composition, in accordance with the preceding embodiment, except that the curable resin composition is prepared by mixing said urethane (meth)acrylate and said reactive diluent to form a mixture and subsequently adding said free radical catalyst to the mixture.

In an alternative embodiment, the instant invention provides a filament winding process, a pultrusion process, and a cured-in-place pipe process incorporating the curable resin composition of the above-disclosed embodiments.

In addition to the ingredients described in the inventive compositions as per previous embodiments, other ingredients may be also included to adjust the reactivity or the processability or any other feature of the composition: this includes ingredients such as activators, inhibitors, internal mold release agents, fillers, thixotropic agents, and other additives as well known to those skilled in the art.

The instant invention also discloses composites prepared from the curable resin composition.

### Detailed Description of the Invention

The instant invention is a curable resin composition. The instant invention is a curable resin composition comprising (1) a urethane methacrylate, (2) a reactive diluent; and (3) a free radical-generating catalyst, as defined in the claims.

The urethane (meth)acrylate can be synthesized through the reaction of polyisocyanates, polyols, and a compound containing both a nucleophilic group and a (meth)acrylate group.

The polyisocyanates used are typically aromatic, aliphatic, and cycloaliphatic polyisocyanates with a number average molar mass below 800 g/mol. Examples of suitable compounds include, but are not limited to diisocyanates from the group of toluene 2,4-/2,6-diisocyanate (TDI), methylenediphenyl diisocyanate (MDI), triisocyanatononane (TIN), naphthyl diisocyanate (NDI), 4,4'-diisocyanatodicyclohexylmethane, 3-isocyanatomethyl-3,3,5-trimethylcyclohexyl isocyanate (isophorone diisocyanate (IIPDI)), tetramethylene diisocyanate, hexamethylene diisocyanate (HDI), 2-methylpentamethylene diisocyanate, 2,2,4-trimethylhexamethylene diisocyanate (THDI), dodecamethylene diisocyanate, 1,4-diisocyanatocyclohexane, 4,4'-diisocyanato-3,3'-dimethyldicyclohexylmethane, 4,4'-diisocyanato-2,2-dicyclohexylpropane, 3 -isocyanatomethyl-1-methyl-1-isocyanatocyclohexane (MCI), 1,3 - diisooctylcyanato -4 -methylcyclohexane, 1,3 - diisocyanato-2-methylcyclohexane, tetramethylxylylenediisocyanate (TMXDI), 4,6'-xylene diisocyanate (XDI), para-phenylene diisocyanate (PPDI), 3,3'-tolidene 4,4'-diisocyanate (TODI), 3,3'-dimethyl-diphenylmethane 4,4'-diisocyanate (DDI), their adducts, their polymeric forms, and also mixtures thereof. Examples of commercial isocyanates suitable for the scope of this invention, are the aromatic isocyanates available from The Dow Chemical Company under the trademark Voranate T-80, Isonate M125, Voranate M2940, or the aliphatic isocyanates available from Evonik and Bayer respectively under the trademarks Vestanat IPDI and Desmodur W. Prior to reaction with the compound containing both a nucleophilic group and a (meth)acrylate group, these isocyanates may optionally be "chain extended" by reaction with a polyol. The polyols used may feature various chain lengths and functionalities in relation to the desired performance level of the resulting polymer. This also includes combinations of polyols that include at least two polyols having different equivalent weights, wherein the short-chain average equivalent weight is from 50 to 2000, preferably from 100 to 1000, and the long chain average equivalent weight is from 2000 to 20,000, preferably from 2000 to 10000. The polyol can be selected from polyether polyols and polyester polyols. Preferably the polyols have a functionality of 2.0 or greater. Examples include polyether polyols such as Voranol 8000LM, Voranol 4000LM, Polyglycol P2000, Voranol 1010L, Polyglycol P425, TPG, Voranol 230-660 and mixtures thereof: also included are polyester polyols such as those available from Stepan Company under the trademark Stepanpol, or those available from COIM under the trademarks Isoexter and Diexter, or those available from Invista under the trademark Terate.

The polyurethane with free terminal isocyanate groups is capped with a compound containing the nucleophilic group (eg. hydroxyl, amino, or mercapto) and ethylenically unsaturated functionalities derived from (meth)acrylate. Preferred examples include 2-hydroxyethyl methacrylate (HEMA), 2-hydroxypropyl methacrylate (HPMA), 2-hydroxyethyl acrylate (HEA), 2-hydroxypropyl acrylate (HPA) and related compounds. These compounds may also form part of the reactive diluent composition in the final curable resin.

Urethane (meth)acrylates utilized in this invention are prepared by two-step reactions. In the first step, the polyurethane oligomers are prepared by reacting an organic polyisocyanate with a mixture of polyols in an equivalent ratio of NCO:OH from 1.4:1 to 3.0:1, using standard procedures, to yield an isocyanate-terminated prepolymer with controlled molecular weight. Any and all ranges between 1.4:1 and 3.0:1 are included herein and disclosed herein, for example, the NCO/OH ratio can range from about 1.4:1 to about 2.3:1. In the second step, polyurethane oligomers with free terminal isocyanate groups are capped with a compound containing the nucleophilic group (e.g. hydroxyl, amino or mercapto) and ethylenically unsaturated functionalities derived from (meth)acrylate by using methods well-known in the art. The functionalized (meth)acrylate component may be provided in a stoichiometric excess with respect to the isocyanate component. The excess functionalized (meth)acrylate component functions as a reactive diluent, which lowers the viscosity of the urethane acrylate composition and cross-links with the urethane (meth)acrylate adduct during formation of the polymer. The percent of free NCO in the final urethane (meth)acrylate is generally in the range of from 0 to 0.1 percent. Any and all ranges between 0 and 0.1 percent are included herein and disclosed herein, for example, the percent of free NCO in the final urethane acrylate can be in the range of from 0 to 0.001%. Alternatively, the urethane (meth)acrylates may be prepared by the so called "reverse process", in which the isocyanate is reacted first with the compound containing the nucleophilic group (e.g. hydroxyl, amino or mercapto) and ethylenically unsaturated functionalities derived from (meth)acrylate, and then with the polyols, as disclosed in US patent 4,246,391. Alternatively, a "one step process" may be adopted, in which the isocyanate is reacted simultaneously with a mixture of the polyol and the compound containing the nucleophilic group (e.g. hydroxyl, amino or mercapto) and ethylenically unsaturated functionalities derived from (meth)acrylate.

In some embodiments, a urethane catalyst can be used to accelerate the reaction. Examples of urethane catalysts include, but are not limited to tertiary amines and metal compounds such as stannous octoate and dibutyltin dilaurate. The urethane catalyst is employed in an amount in the range of from 10 to 1000 ppm based on the total weight of the urethane (meth)acrylate, preferably from 50 to 400 ppm.

Additionally, in some embodiments, an inhibitor can be added to avoid the free radical polymerization of (meth)acrylates during storage. Preferred inhibitors include (2,2,6,6-Tetramethylpiperidin-1-yl)oxyl (TEMPO), Mono Methyl Ether of Hydroquinone (MEHQ), dihydroxybenzenes, benzoquinones, hindered phenols, and hindered phenols based on triazine derivatives. The preferred percentage of inhibitor is 50 to 10000 ppm, preferably 100 to 1000 ppm, based on the total weight of the curable resin.

Commercially available urethane (meth)acrylates can also be used. These include, but are not limited to CN 1963, CN9167, CN 945A60, CN 945A70 CN 944B85, CN 945B85, CN 934, CN 934X50, CN 966A80, CN 966H90, CN 966J75, CN 968, CN 981, CN 981A75, CN 981B88, CN 982A75, CN 982B88, CN 982E75, CN 982P90, CN 983B88, CN 985B88, CN 970A60, CN 970E60, CN 971A80, CN 972, CN 973A80, CN 977C70, CN 975, CN 978, all available from Sartomer. Mixtures thereof can also be used.

The weight ratio of low molecular weight urethane (meth)acrylate (50-2000) and high molecular weight urethane (meth)acrylate (2000-20,000) generally ranges from 1:100 to 100:1, preferably from 1:10 to 10:1. All individual values and subranges from 0.1:1 to 100:1 are included herein and disclosed herein; for example, the weight ratio of low molecular weight urethane (meth)acrylate and high molecular weight urethane (meth)acrylate can be from 0.1:10 to 25:1; or in the alternative, the weight ratio of low molecular weight urethane (meth)acrylate and high molecular weight urethane (meth)acrylate can be from 1:10 to 10:1.

The curable resin composition may comprise 30 to 80 percent by weight of urethane (meth)acrylate. All individual values and subranges from 30 to 80 weight percent are included herein and disclosed herein; for example, the weight percent of urethane (meth)acrylate can be from a lower limit of 30, 35, 40, 50, or 55 weight percent to an upper limit of 60, 65, 70, 75, 80 weight percent. For example, the curable resin composition may comprise30 to 80 percent by weight of urethane (meth)acrylate; or in the alternative, the curable resin composition may comprise 40 to 65 percent by weight of urethane (meth)acrylate.

The reactive diluent is a liquid reaction medium containing at least one ethylenic double bond. The reactive diluent is curable by polymerization in the presence of a free radical catalyst. In an embodiment, the reactive diluent does not contain styrene. The scope of this invention includes the use of reactive diluents that are glycols and/or polyols with terminal acrylate or methacrylate groups, thus carrying two or more ethylenic double bonds: such ingredients comprise at least 20 % by weight of the total reactive diluent composition. Examples of glycols and/or polyols with terminal acrylate or methacrylate groups include 1,4-butanediol diacrylate (BDDA), 1,6-hexanediol diacrylate (HDDA), diethylene glycol diacrylate, 1,3-butylene glycol diacrylate, neopentyl glycol diacrylate, cyclohexane dimethanol diacrylate, dipropylene glycol diacrylate, tripropylene glycol diacrylate, ethoxylated or propoxylated bisphenol A diacrylate, trimethylolpropane triacrylate, pentaerythritol triacrylate, pentaerythritol tetraacrylate, dipentaerythritol hexaacrylate, polyethylene glycol diacrylate, polypropylene glycol diacrylate, ethoxylated or propoxylated glycerine triacrylate, poly tetramethylene glycol diacrylate, ethoxylated or propoxylated trimethylolpropane triacrylate, ethoxylated or propoxylated pentaerythritol tetraacrylate, their corresponding methacrylate analogues, and derivatives and mixtures thereof. As mentioned previously, at least 20 percent by weight (based on the total amount) of the reactive diluent) is comprised of glycols and/or polyether polyols with terminal acrylate or methacrylate groups, namely molecules carrying at least 2 ethylenic double bonds. Any and all ranges greater than 20 percent are included herein and disclosed herein; for example, at least 50 % of the reactive diluent is comprised of glycols and/or polyether polyols with terminal acrylate or methacrylate groups; or in the alternative, at least 80 % of the reactive diluent is comprised of glycols and/or polyether polyols with terminal acrylate or methacrylate groups.

The remaining 80 percent or less by weight of the total reactive diluent composition includes mono-functional radical polymerizable monomers carrying one acrylate-reactive unsaturated functional group selected from the group of vinyl, allyl, cyclic allyl, cyclic vinyl, acrylic, functionalized and non-functionalized acrylic, acrylamides, acrylonitrile, and combinations thereof.

Specific examples include vinyl toluene, divinyl benzene, allylic derivatives such as diallyl phthalate, and (meth)acrylates such as methyl methacrylate, tert-butyl methacrylate, iso-butyl methacrylate, hydroxyethyl acrylate, hydroxypropyl acrylate, hydroxyethyl methacrylate, hydroxyethyl acrylamide, hydroxypropyl acrylamide, and mixtures thereof. Also included, though less preferred, is styrene.

The reactive diluent is preferably added in an amount of about 20 to 80 % of the total weight of urethane (meth)acrylate + reactive diluent, and 30 to 70 weight % is preferable. A non-reactive diluent, as is known in the art, may also be used: the non-reactive diluent may for instance be a plasticizer such as phthalate, and is preferably added in an amount of from 5 to 10 parts by weight based on the total weight of the urethane acrylate composition.

The curable resin composition may comprise 1 to 99 percent by weight of reactive diluents. All individual values and subranges from 1 to 99 weight percent are included herein and disclosed herein; for example, the weight percent of reactive diluents can be from a lower limit of 1, 5, 10, 15, 25, 30, 35, 40, 50, or 55 weight percent to an upper limit of 60, 65, 70, 75, 80, 85, 90, or 99 weight percent. For example, the curable resin composition may comprise 1 to 99 percent by weight of reactive diluent; or in the alternative, the curable resin composition may comprise 10 to 90 percent by weight of reactive diluent; or in the alternative, the curable resin composition may comprise 35 to 60 percent by weight of reactive diluent. In an embodiment, the curable resin composition may comprise from 10 to 90 percent by weight of reactive diluents, the rest consisting mainly of the urethane (meth)acrylate.

Suitable free radical-generating catalysts include peroxide or azo type compounds, as set out in the claims. Examples of peroxide catalysts include organo peroxides and hydroperoxides such as tert-Butyl peroxyneodecanoate, benzoyl peroxide, dicumyl peroxide,methyl ethyl ketone peroxide, lauryl peroxide, cyclohexanone peroxide, t-butyl perbenzoate, t-butyl hydroperoxide, t-butylbenzene hydroperoxide, cumene hydroperoxide, t-butyl peroctoate, and the like. Examples of azo compounds include azobis-isobutyronitrile, 2-tbutylazo-2-cyano-4-methylpentane, and 4-t-butylazo-4-cyano-valeric acid. Without intending to be bound or limited by any particular theory, it is believed that the free radical-generating catalyst serves as a source of free radicals, which may be released upon heating or through an interaction with an accelerator, described in further detail below. Combinations of different peroxides may be advantageously used: for instance, peroxides which release free radicals upon heating to a certain temperature may be combined with peroxides that release radicals upon heating to a higher temperature. Examples of suitable commercial peroxides are available from Akzo Nobel under the trademark Trigonox and Perkadox.

The curable resin composition may comprise 0.001 to 10 percent by weight of a free radical-generating catalyst. All individual values and subranges from 0.001 to 10 weight percent are included herein and disclosed herein; for example, the weight percent of the free radical-generating catalyst can be from a lower limit of 0.001, 0.05, 0.1, or 0.5 weight percent to an upper limit of 1, 1.5, 2, 2.5, 3, 3.5, 4, 4.4, 5, 6, 7, 8, 9, or 10 weight percent. For example, the curable resin composition may comprise 0.001 to 10 percent by weight of free radical-generating catalyst; or in the alternative, the curable resin composition may comprise 0.05 to 2 percent by weight of free radical-generating catalyst; or in the alternative, the curable resin composition may comprise 0.1 to 1 percent by weight of free radical-generating catalyst, or in the alternative, the curable resin composition may comprise from 0.1 to 5 percent by weight of free radical-generating catalyst.

The curable resin composition may include other ingredients, such as activators: these are metal carboxylates capable of increasing the effectiveness of the free radical-generating catalyst, consequently improving the degree of polymerization of the curable resin. Examples of activators include metal carboxylates, and cobalt salts such as cobalt naphtenate, and they may be used at a level of about 0.01 to 1 % by weight of the curable resin composition. Accelerators represent another ingredient that can effectively increase the speed and completeness of the radical polymerization of the curable resin. The accelerator may be selected from the group of anilines, amines, amides, pyridines, and combinations thereof. Another example of an accelerator, not selected from the group of anilines, amines, amides, and pyridines is acetylacetone. In various embodiments, the accelerator, if included, includes a dimethyl toluidine or a dialkyl aniline. In various other embodiments, the accelerator, if included, includes N,N-dimethyl-p-toluidine, N,N-diethylaniline, N,N-dimethylaniline, and combinations thereof. If present, the accelerator is generally present in an amount of from 0.01 to 0.5 by weight of the curable resin composition. The curable resin composition may also include a gel time retarder. Addition of a gel time retarder decreases the gel time of the urethane acrylate composition. If included, the gel time retarder is generally selected from the group of diones, naphthenates, styrenes, and combinations thereof. In various embodiments, if included, the gel time retarder includes 2,4-pentanedione. In various other embodiments, if included, the gel time retarder is included in an amount of from 0.01 to 0.3 by weight of the resin system.

It should be noted that the free radical catalyst system, namely the peroxides or azo compounds plus the other ingredients directly associated with the speed of radical polymerization (activators, accelerators, retarders) are preferably added to the rest of the curable resin, comprising the urethane acrylate and the reactive diluent, preferably shortly before the curable resin undergoes polymerization: in fact the free radical-generating catalyst system may have a negative impact on the storage stability of the curable resin.

Other ingredients may be also included in the curable resin, some of these preferably shortly before the curable resin undergoes polymerization, to avoid possible negative impact on the storage stability of the curable resin. Thus, internal mold release agents may be included to facilitate the release of the polymerized composite article from the mold in which it has been prepared: the amount may range from about 0.1 % to about 5 % by weight of the curable resin composition, and examples of suitable products are the internal mold release agents for composite applications available from Axel or from Wurtz.

Other types of ingredients that may be included in the curable resin are fillers, which may be used for a number of different reasons, such as to provide pigmentation, flame retardance, insulation, thixotropicity, aid with dimensional stability and physical properties, and reduced cost of the composite structure. Suitable fillers for the urethane acrylate layer include reactive and non-reactive conventional organic and inorganic fillers. Examples include, but are not limited to, inorganic fillers, such as calcium carbonate, silicate minerals, for example, both hollow and solid glass beads, phyllosilicates such as antigorite, serpentine, hornblends, amphiboles, chrysotile, and talc; metal oxides and hydroxides, such as aluminum oxides, aluminium hydroxide, titanium oxides and iron oxides; metal salts, such as chalk, barite and inorganic pigments, such as cadmium sulfide, zinc sulfide and glass, inter alia; kaolin (china clay), and aluminum silicate and co-precipitates of barium sulfate and aluminum silicate. Examples of suitable organic fillers include, but are not limited to, carbon black and melamine. Thixotropic agents that are useful in this invention include fumed silica, organoclays, inorganic clays and precipitated silica. The amount of filler used for the purposes of this invention, will depend of the type of filler and reason for its presence in the system: thus, the thixotropic agents are often used at levels of up to about 2 percent by weight, while fillers that have a flame retardant action such as aluminium hydroxide, may be used in much larger amounts, in an amount that is in fact comparable or even larger than the amount of curable resin, comprising the urethane acrylate plus the reactive diluent.

Other additives having specific functions, as known in the industry, may also be included in the curable resin composition: examples include but are not limited to, air release agents, adhesion promoters, leveling agents, wetting agents, UV absorbers and light stabilizers.

In production of the curable resin composition, the method for producing such a composition includes blending or mixing urethane (meth)acrylates and reactive diluents first for long time storage (generally more than one month) and then adding the free radical-generating catalyst.

The polymerization and curing of the urethane acrylate resin is effected, using well-known procedures in the art, preferably in the presence of a polymerization catalyst. The resin composition may be thermally cured or light- cured. As for thermal curing, the curing temperature is dependent on the particular catalyst used. In one embodiment, the curable resin composition can be cured from 25°C to 200°C, and in another embodiment, the curable resin composition can be cured from 70°C to 150°C. As for light curing, the light source is dependent on the particular photoinitiator catalyst used. The light source can be visible light or UV light.

The curable resin composition contains urethane groups which provide toughness to the resin and improved adhesion to substrates and or fibers without dealing with isocyanate groups that are present in urethane resins. They provide the performance of high-end composite resins such as epoxy and polyurethanes with a reactivity that is commonly found in polyester and vinyl ester resins. These compositions can be used in pultrusion, filament winding, closed mold infusion, and cured-in-place pipe applications. They can be used with glass fibers as well as carbon fibers. A cured article prepared from the curable resin composition can be used to produce composites, coatings, adhesives, inks, encapsulations, or castings. The composites can be used in applications such as, for example, wind turbines, boat hulls, truck bed covers, automobile trim and exterior panels, pipe, tanks, window liners, seawalls, composite ladders and the like.

### Examples

The present invention will now be explained in further detail by showing Inventive Examples, and Comparative Examples, but the scope of the present invention is not, of course, limited to these Examples.

### Materials

Isonate OP50 is a 50:50 weight % mixture of 4,4'-MDI and 2,4'-MDI available from The Dow Chemical Company (TDCC)
Voranol P1010 is a polypropylene oxide diol with molecular weight about 1000 from TDCC
Voranol P2000 is a polypropylene oxide diol with molecular weight about 2000 from TDCC
TPG is tri propylene glycol, from TDCC
Dabco T12 is dibutyl tin dilaurate, a urethane catalyst available from Air Products and Chemicals
ROCRYL^{™}400 Hydroxyethyl methacrylate (HEMA) available from TDCC
Ethylene glycol dimethacrylate and DEG dimethacrylate, available from Evonik
Trimethylolpropane triacrylate available from Sartomer under the name SR351
Tri ethylene glycol dimethacrylate available from BASF
PEG dimethacrylate MW 550 available from Sigma Aldrich
PPG dimethacrylate MW 550 available from Sigma Aldrich
Trigonox 23 (tert-Butyl peroxyneodecanoate) is obtained from AkzoNobel

### Procedures

### Plaque Preparation of urethane acrylate

The mold was made from "U"-shaped, 4 mm thick aluminum spacers positioned between two thick heavy metal plates. The mold was coated with a proprietary release agent. A rubber tubing was used for gasket material following the inside dimensions of the spacer. Once assembled, the mold was clamped together with multiple screws. The open end of the "U"-shaped spacer faced upward. The internal volume of the mold was 10 cm x 20 cm x 0.4 cm. After the mold was filled with the curable resin, it was placed in an oven for thermal curing: the plaque was cured at 100 °C for 1-2 hours.

### Dynamic Mechanical Thermal Analysis

Glass transition temperature (Tg) was determined by Dynamic Mechanical Thermal Analysis (DMTA), using a TA instrument Rheometer. Rectangular samples were placed in solid state fixtures and subjected to an oscillating torsional load. The samples were thermally ramped from about -60°C to about 200 °C at a rate of 3 °C/minute and 1 Hertz (Hz) frequency.

**Table I**

| **Run** | **A** | **B** | **C** | **D** | **E** | **F** | **G** | **H** | **I** |
|---|---|---|---|---|---|---|---|---|---|
| **Urethane acrylate** | | | | | | | | | |
| Isonate OP 50 | **19** | **26.25** | **32** | | | | | | |
| Voranol P1O1O | **51** | **51** | | | | | | | |
| Voranol P2000 | | | **18** | | | | | | |
| TPG | | | **9.33** | | | | | | |
| Catalyst (Dabco T12) | **0.02** | **0.02** | **0.01** | | | | | | |
| Hydroxy ethyl meta acrylate | **14.3** | **14.3** | **18.2** | | | | | | |
| Reactive **diluent** | | | | | | | | | |
| Hydroxy ethyl meta acrylate | **70** | **10** | **15** | **20** | | | **35** | **25** | **25** |
| Triethylene glycol Dimethacrylate | | **60** | | | | | | | |
| Diethylene glycol dimethacrylate | | | **44** | **22** | **22** | **22** | | | |
| Ethylene glycol dimethacrylate | | | | **47.5** | **47.5** | | | | |
| PEG dimethacrylate MW 550 | | | | | | | | | **65** |
| SR351 (Trimetilolpropane triacrylate) | | | | | | | | **10** | **10** |
| PPG dimethacrylate MW 550 | | | | **20** | **40** | **87.5** | **65** | **65** | |
| **Percent reactive diluent** | **45.36** | **43.32** | **43.21** | **100** | **100** | **100** | **100** | **100** | **100** |
| **Physical mechanical Tests (Norm)** | | | | | | | | | |
| Tensile Str. - Mpa (ISO 527-2) | 25 | 18 | 35.5 | NA | NA | NA | 12.5 | 10.8 | 13.4 |
| Tensile Mod. - Mpa (ISO 527-2) | 640 | 540 | 1902 | NA | NA | NA | 400 | 474 | 607 |
| DMTA 3-point bending - Tg °C | 107 | 110 | 134 | NA | NA | NA | 52 | NA | 65 |
| % weight increase after 3 days at 70°C, 90 % relative humidity, followed by 1 day conditioning at room temp and 50 % humidity | 4% | 1% | 1% | NA | NA | NA | NA | NA | NA |

### Curable resins preparation

The formulations of Table I, above, were prepared according to a multi step process, consisting of the reaction between the isocyanate and the polyol and the capping agent (in the experiments, HEMA) to obtain the urethane acrylate that was further combined with various reactive diluents as described in Table I. A catalyst (Dabco T12) was also used to accelerate the reaction between isocyanate and hydroxyl groups. The various curable resins were stabilized by including also about 0.05 - 0.1 % MEHQ (Mono Methyl Ether of Hydroquinone), which was in certain cases already included in some of the ingredients: for example, the Rocryl 400 used in these experiments was already stabilized with about 200 ppm MEHQ.

All formulations were cured by adding about 1 % Trigonox 23, mixing, degassing, pouring the liquid resin in the mold, and then placing the mold in the oven.

Formulations A, B, C, contain the same amount of reactive diluent, about 43 %, except recipe A, which contains slightly more. Formulation A represents the comparative formulation, that uses HEMA as reactive diluent. Formulations B and C represent inventive examples. The physical mechanical testing results show that formulation A matches the inventive examples on key performance aspects such as Tg or modulus. However formulation A misses an important performance aspect, the water pick up test, showing that formulation A has a rather high water pick up value.

Formulation C shows how the inventive technology can result in an even more attractive combination of properties when the urethane acrylate is based on a combination of long chain and short chain polyether polyol.

Formulations D to I are only based on combinations of reactive diluents, without the urethane acrylate component. Some of these recipes result in a polymer that is too brittle and that therefore cannot be tested while others result in a polymer with a low level of performance, such as low Tg or low modulus. This demonstrates that while combinations of urethane acrylates and reactive diluents can provide a good overall balance of properties, using only the reactive diluents cannot deliver the desired level of polymer performance.

Table II reports some additional formulations, together with some test results, in particular the Tg and the water pick up. While the Tg values are similar for the three formulations, the comparative recipe 1a is showing relatively high values of water pick up, due to the large amount of hydroxyacrylate diluent in formulation. On the other hand, the inventive recipes 2a and 3a, show much better performance in terms of water pick up.

**Table II**

| **Run** | **1a** | **2a** | **3a** |
|---|---|---|---|
| **Urethane acrylate** | | | |
| Isonate OP 50 | **26.25** | **26.25** | **26.25** |
| Voranol P1010 | **51.00** | **51.00** | **51.00** |
| Catalisi (Dabco T12) | **0.02** | **0.02** | **0.02** |
| Hydroxy ethyl meta acrylate | **14.30** | **14.30** | **14.30** |
| **Reactive diluent** | | | |
| Hydroxy ethyl meta acrylate | **70.00** | **20.00** | **5.00** |
| Ethylene glycol dimethacrylate | | **20.00** | **25.00** |
| Tripropylene glycol diacrylate | | **30.00** | **40.00** |
| | | | |
| Percent reactive diluent | **43.32** | **43.32** | **43.32** |
| **Physical mechanical Tests (Norm)** | | | |
| DMTA 3-point bending - Tg °C | **105** | **100** | **95** |
| % weight increase after 3 days at 70°C, 90 % relative humidity, followed by 1 day conditioning at room temp and 50 % humidity | **5.0** | **2.0** | **1.5** |

## Claims

1. A curable resin composition comprising:
(1) 30 to 80 percent by weight of a urethane (meth)acrylate;
(2) a reactive diluent comprising at least 20 percent by weight of glycols and/or polyols with at least two terminal acrylate or methacrylate groups; and
(3) a free radical-generating catalyst selected from tert-Butyl peroxyneodecanoate, benzoyl peroxide, dicumyl peroxide,methyl ethyl ketone peroxide, lauryl peroxide, cyclohexanone peroxide, t-butyl perbenzoate, t-butyl hydroperoxide, t-butylbenzene hydroperoxide, cumene hydroperoxide, t-butyl peroctoate, azobis-isobutyronitrile, 2-tbutylazo-2-cyano-4-methylpentane, and 4-t-butylazo-4-cyano-valeric acid.

2. The curable resin composition according to Claim 1, wherein said curable resin composition comprises 40 to 65 percent by weight of said urethane (meth)acrylate, 35 to 60 percent by weight of said reactive diluent, and 0.001 to 10 percent by weight of said free radical-generating catalyst, based on the total weight of the curable resin composition.

3. The curable resin composition according to Claim 1 or Claim 2, wherein said urethane (meth)acrylate is a reaction product of a polyisocyanate, a polyol, and a compound comprising a nucleophilic group and a (meth)acrylate group.

4. The curable resin composition according to Claim 3, wherein the compound comprising a nucleophilic group and a (meth)acrylate group is selected from the group consisting of hydroxyethyl acrylate, hydroxypropyl acrylate, hydroxyethyl methacrylate, hydroxyethyl acrylamide, hydroxypropyl acrylamide, and mixtures thereof.

5. The curable resin composition according to any one of the preceding claims, wherein the urethane (meth)acrylate has a free isocyanate group content in the range of from 0 to 0.1 percent by weight, based on the total weight of the urethane (meth)acrylate.

6. The curable resin composition according to any one of the preceding claims, wherein said reactive diluent is selected from the group consisting of 1,4-butanediol diacrylate (BDDA), 1,6-hexanediol diacrylate (HDDA), diethylene glycol diacrylate, 1,3-butylene glycol diacrylate, neopentyl glycol diacrylate, cyclohexane dimethanol diacrylate, dipropylene glycol diacrylate, tripropylene glycol diacrylate, ethoxylated bisphenol A diacrylate, trimethylolpropane triacrylate, pentaerythritol triacrylate, pentaerythritol tetraacrylate, their corresponding methacrylate analogues, and derivatives and mixtures thereof.

7. The curable resin composition of any one of the preceding claims,
wherein said curable resin composition is prepared by mixing said urethane (meth)acrylate and said reactive diluent to form a mixture and subsequently adding said free radical catalyst to the mixture.

8. A filament winding process incorporating the curable resin composition of any one of the preceding claims.

9. A pultrusion process incorporating the curable resin composition of any one of Claims 1-8.

10. A cured-in-place pipe process incorporating the curable resin composition of any one of Claims 1-8.

11. An infusion process incorporating the curable resin composition of any one of Claims 1-8.

12. A cured article comprising a composite, a coating, an adhesive, an ink, an encapsulation, or a casting prepared from the curable resin composition of any one of Claims 1-8.

## Patentansprüche

1. Eine härtbare Harzzusammensetzung, die Folgendes beinhaltet:
(1) zu 30 bis 80 Gewichtsprozent ein Urethan(meth)acrylat;
(2) einen Reaktivverdünner, der zu mindestens 20 Gewichtsprozent Glycole und/oder Polyole mit mindestens zwei endständigen Acrylat- oder Methacrylatgruppen beinhaltet; und
(3) einen radikalerzeugenden Katalysator, der aus tert-Butylperoxyneodecanoat, Benzoylperoxid, Dicumylperoxid, Methylethylketonperoxid, Laurylperoxid, Cyclohexanonperoxid, t-Butyl-Perbenzoat, t-Butyl-Hydroperoxid, t-Butylbenzenhydroperoxid, Cumenhydroperoxid, t-Butyl-Peroctoat, Azobisisobutyronitril, 2-t-Butylazo-2-cyano-4-Methylpentan und 4-t-Butylazo-4-cyan-valeriansäure ausgewählt ist.

2. Härtbare Harzzusammensetzung gemäß Anspruch 1, wobei die härtbare Harzzusammensetzung, bezogen auf das Gesamtgewicht der härtbaren Harzzusammensetzung, zu 40 bis 65 Gewichtsprozent das Urethan(meth)acrylat, zu 35 bis 60 Gewichtsprozent den Reaktivverdünner und zu 0,001 bis 10 Gewichtsprozent den radikalerzeugenden Katalysator beinhaltet.

3. Härtbare Harzzusammensetzung gemäß Anspruch 1 oder Anspruch 2, wobei das Urethan(meth)acrylat ein Reaktionsprodukt eines Polyisocyanats, eines Polyols und einer Verbindung, die eine nukleophile Gruppe und eine (Meth)acrylatgruppe beinhaltet, ist.

4. Härtbare Harzzusammensetzung gemäß Anspruch 3, wobei die Verbindung, die eine nukleophile Gruppe und eine (Meth)acrylatgruppe beinhaltet, aus der Gruppe ausgewählt ist, die aus Hydroxyethylacrylat, Hydroxypropylacrylat, Hydroxyethylmethacrylat, Hydroxyethylacrylamid, Hydroxypropylacrylamid und Mischungen davon besteht.

5. Härtbare Harzzusammensetzung gemäß einem der vorhergehenden Ansprüche, wobei das Urethan(meth)acrylat, bezogen auf das Gesamtgewicht des Urethan(meth)acrylats, einen Gehalt an freien Isocyanatgruppen im Bereich von 0 bis 0,1 Gewichtsprozent aufweist.

6. Härtbare Harzzusammensetzung gemäß einem der vorhergehenden Ansprüche, wobei der Reaktivverdünner aus der Gruppe ausgewählt ist, die aus 1,4-Butandioldiacrylat (BDDA), 1,6-Hexandioldiacrylat (HDDA), Diethylenglycoldiacrylat, 1,3-Butylenglycoldiacrylat, Neopentylglycoldiacrylat, Cyclohexandimethanoldiacrylat, Dipropylenglycoldiacrylat, Tripropylenglycoldiacrylat, ethoxyliertem Bisphenol-A-Diacrylat, Trimethylolpropantriacrylat, Pentaerythritoltriacrylat, Pentaerythritoltetraacrylat, deren entsprechenden Methacrylatanaloga und Derivaten und Mischungen davon besteht.

7. Härtbare Harzzusammensetzung gemäß einem der vorhergehenden Ansprüche, wobei die härtbare Harzzusammensetzung durch das Mischen des Urethan(meth)acrylats und des Reaktivverdünners, um eine Mischung zu bilden, und nachfolgendes Hinzugeben des Radikalkatalysators zu der Mischung hergestellt wird.

8. Ein Wickelvorgang, der die härtbare Harzzusammensetzung gemäß einem der vorhergehenden Ansprüche inkorporiert.

9. Ein Pultrusionsverfahren, das die härtbare Harzzusammensetzung gemäß einem der Ansprüche 1-8 inkorporiert.

10. Ein Cured-in-Place-Pipe-Verfahren, das die härtbare Harzzusammensetzung gemäß einem der Ansprüche 1-8 inkorporiert.

11. Ein Infusionsverfahren, das die härtbare Harzzusammensetzung gemäß einem der Ansprüche 1-8 inkorporiert.

12. Ein gehärteter Artikel, der einen Verbundstoff, eine Beschichtung, ein Haftmittel, eine Druckfarbe, eine Verkapselung oder einen Guss, hergestellt aus der härtbaren Harzzusammensetzung gemäß einem der Ansprüche 1-8, beinhaltet.

## Revendications

1. Une composition de résine durcissable comprenant :
(1) de 30 à 80 pour cent en poids d'un (méth)acrylate d'uréthane ;
(2) un diluant réactif comprenant au moins 20 pour cent en poids de glycols et/ou polyols avec au moins deux groupes acrylate ou méthacrylate terminaux ; et
(3) un catalyseur générateur de radicaux libres sélectionné parmi le peroxynéodécanoate de tert-butyle, le peroxyde de benzoyle, le peroxyde de dicumyle, le peroxyde de méthyl éthyl cétone, le peroxyde de lauryle, le peroxyde de cyclohexanone, le perbenzoate de t-butyle, l'hydroperoxyde de t-butyle, l'hydroperoxyde de t-butylbenzène, l'hydroperoxyde de cumène, le peroctoate de t-butyle, l'azobis-isobutyronitrile, le 2-t-butylazo-2-cyano-4-méthylpentane, et l'acide 4-t-butylazo-4-cyano-valérique.

2. La composition de résine durcissable selon la revendication 1, ladite composition de résine durcissable comprenant de 40 à 65 pour cent en poids dudit (méth)acrylate d'uréthane, de 35 à 60 pour cent en poids dudit diluant réactif, et de 0,001 à 10 pour cent en poids dudit catalyseur générateur de radicaux libres, rapporté au poids total de la composition de résine durcissable.

3. La composition de résine durcissable selon la revendication 1 ou la revendication 2, dans laquelle ledit (méth)acrylate d'uréthane est un produit de réaction d'un polyisocyanate, d'un polyol, et d'un composé comprenant un groupe nucléophile et un groupe (méth)acrylate.

4. La composition de résine durcissable selon la revendication 3, dans laquelle le composé comprenant un groupe nucléophile et un groupe (méth)acrylate est sélectionné dans le groupe constitué d'hydroxyéthyl acrylate, d'hydroxypropyl acrylate, d'hydroxyéthyl méthacrylate, d'hydroxyéthyl acrylamide, d'hydroxypropyl acrylamide, et de mélanges de ceux-ci.

5. La composition de résine durcissable selon n'importe laquelle des revendications précédentes, dans laquelle le (méth)acrylate d'uréthane a une teneur en groupe isocyanate libre comprise dans la gamme allant de 0 à 0,1 pour cent en poids, rapporté au poids total du (méth)acrylate d'uréthane.

6. La composition de résine durcissable selon n'importe laquelle des revendications précédentes, dans laquelle ledit diluant réactif est sélectionné dans le groupe constitué de diacrylate de 1,4-butanediol (BDDA), de diacrylate de 1,6-hexanediol (HDDA), de diacrylate de diéthylène glycol, de diacrylate de 1,3-butylène glycol, de diacrylate de néopentyl glycol, de diacrylate de cyclohexane diméthanol, de diacrylate de dipropylène glycol, de diacrylate de tripropylène glycol, de diacrylate de bisphénol A éthoxylé, de triacrylate de triméthylolpropane, de triacrylate de pentaérythritol, de tétracrylate de pentaérythritol, leurs analogues méthacrylate correspondants, et des dérivés et mélanges de ceux-ci.

7. La composition de résine durcissable de n'importe laquelle des revendications précédentes, ladite composition de résine durcissable étant préparée en mélangeant ledit (méth)acrylate d'uréthane et ledit diluant réactif afin de former un mélange et en ajoutant subséquemment ledit catalyseur de radicaux libres au mélange.

8. Un procédé d'enroulement de filament incorporant la composition de résine durcissable de n'importe laquelle des revendications précédentes.

9. Un procédé de pultrusion incorporant la composition de résine durcissable de n'importe laquelle des revendications 1 à 8.

10. Un procédé de tuyau durci sur place incorporant la composition de résine durcissable de n'importe laquelle des revendications 1 à 8.

11. Un procédé d'infusion incorporant la composition de résine durcissable de n'importe laquelle des revendications 1 à 8.

12. Un article durci comprenant un composite, un revêtement, un adhésif, une encre, une encapsulation, ou un coulage préparé à partir de la composition de résine durcissable de n'importe laquelle des revendications 1 à 8.
